# EUROPEAN PATENT SPECIFICATION

(11) **EP 1 922 237 B1**
(45) Date of publication and mention of the grant of the patent: **25.02.2009**
(21) Application number: 06779247.3
(22) Date of filing: 31.08.2006
(51) Int. Cl.: B62B 3/16

(54) **DOLLY AND LID COMBINATION**
WAGEN- UND DECKELKOMBINATION
ASSOCIATION DE CHARIOT ET COUVERCLE

(30) Priority: 06.09.2005 GB 0518087
(43) Date of publication of application: 21.05.2008
(73) Proprietor: K.Hartwall Limited, Spennymoor Co. Durham DL16 6BP (GB)
(72) Inventor: THOMPSON, David, Andrew, Houghton Le Spring DH4 7TQ (GB); JAMES, Michael, Nottinghamshire NG15 6NW (GB)
(74) Representative: Hulse, Thomas Arnold
(86) International application number: PCT/GB2006/003225
(87) International publication number: WO 2007/028958

(56) References cited:
- EP-A2- 0 807 586
- WO-A-20/05028276
- US-A- 5 186 330
- US-A1- 2004 195 793

## Description

This invention relates to a dolly and lid combination for transporting loads, being of the type in which the dolly is provided with at least two strapping strands at opposite sides (or ends) of the dolly retractable on to reels and adapted to be engaged with corresponding sides (or ends) of the lid after it has been placed on top of a load (e.g. of trays or boxes), and the reels locked to secure the lid on top of the load.

Document WO 2005/028276 A discloses a dolly and lid combination for transporting loads, in which the dolly is provided with at least two strapping strands at opposite sides of the dolly suitable to be retractable on to reels and adapted to be engaged with corresponding sides of the lid after it has been placed on top of a load, wherein the dolly has upstanding formations (suitable) for location of the lid for return transportation, and the lid is of shell construction with criss-crossing stiffening webs inside, areas in the corners being sufficiently free of webs to allow for accommodation of the wheels of a like dolly when the lid has been located on the first dolly.

The object of the invention is to provide such a dolly and lid combination that facilitates stacking of empty dollies and lids for return transportation.

According to the present invention as defined in claim 1, in a dolly and lid combination the dolly has upstanding formations for location of the lid for return transportation, and the lid is of shell construction with criss-crossing stiffening webs inside (e.g. extending in longitudinal and lateral directions), areas in the corners being sufficiently free of webs to allow for accommodation of the wheels of a like dolly when the lid has been located on the first dolly in an inverted disposition.

Therefore, while the lid may have an overall depth of say 70mm, a thickness of shell of say 3mm results in a very compact stacking of inverted lids and dollies in alternation; however, the topmost lid should be disposed right way up to keep out rainwater; and the strapping strands can be engaged with the topmost lid, to secure the load of dollies and lids on the bottom (first) dolly.

The upstanding formations may be formed by bent wire loops welded to the corners of the dolly frame; and the upstanding formations at one end may also include upright portions of tube forming sockets for detachably receiving the legs of an inverted generally U-shaped tubular handle.

Two opposite sides (or usually the ends) of the dolly are preferably each provided with an inverted generally U-shaped stacking wire for location of loaded trays or boxes, which stacking wires also facilitate location of the inverted lid and the next dolly seated therein.

When not in use to secure a load, the reels for the strapping strands may be accommodated in pockets below the respective sides (or ends) of the dolly, one end of each strand being secured to the respective reel on to which the strand is wound by a clock spring in the reel, while the other end is passed through a hole in the back of the respective pocket and secured by a ferrule crimped in place; and the lid is provided with recesses for engagement by the reel holders when required for securing a load.

With symmetry of the ends of the lid and of the ends of the dolly (apart from the provision of castors at one end of the dolly and non-swivelling wheels at the other, and sockets at one end for a detachable handle) a plurality of such dollies and lids is not orientation sensitive, and the web-free areas in the corners at either end of the lids will accommodate the castors at any angle.

The base of the dolly preferably comprises wire rods or mesh in one plane, so as to provide widely distributed support for a load (e.g. of trays or boxes) or for the inverted lid, for transmission of the load of the next dolly seated therein to the bottom (first) dolly, and so on through a stack of inverted lids and dollies in alternation.

An embodiment of the invention will now be described, by way of example only, with reference to the accompanying drawings, in which:-
Figure 1 is an isometric view of a dolly, for use in a combination of dolly and lid in accordance with the invention, as viewed from above one end and side;
Figure 2 is an isometric view of the dolly as viewed from below the same end and side;
Figure 3 is an isometric view of a lid, for use in combination with the dolly of Figures 1 and 2, as viewed from above one end and side;
Figure 4 is an isometric view of the lid inverted ready for use in stacking mode together with like dollies and lids;
Figure 5 is an isometric view of the dolly and lid combination in use with a stack of boxes secured therebetween; and
Figure 6 is an isometric view of a plurality of like dollies and lids compactly stacked and secured between the dolly and lid combination.

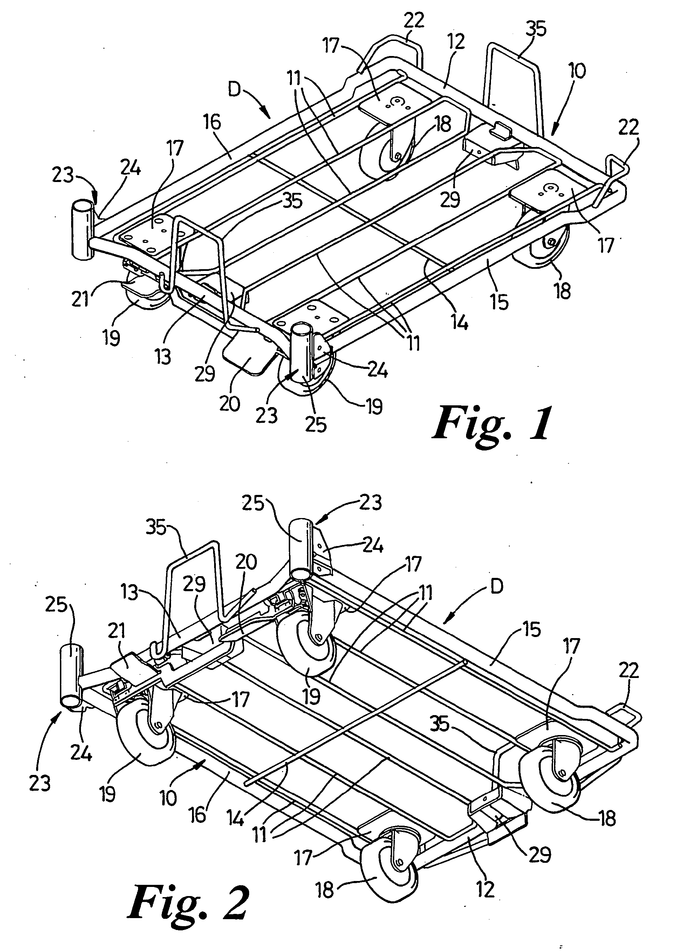

The dolly D shown in Figures 1 and 2 has a tubular frame 10 with wire rods 11 extending longitudinally between its ends 12, 13 and welded thereto, and with a further rod 14 extending transversely below the rods 11 and welded thereto as well as to the sides 15, 16 of the frame. Also welded to the rods 11 are plates 17 carrying castors 18 at the end 12 and non-swivelling wheels 19 at the end 13, which end is also provided with 'ON' and 'OFF' pedals 20, 21 respectively for a brake mechanism for engaging the wheels 19 when necessary.

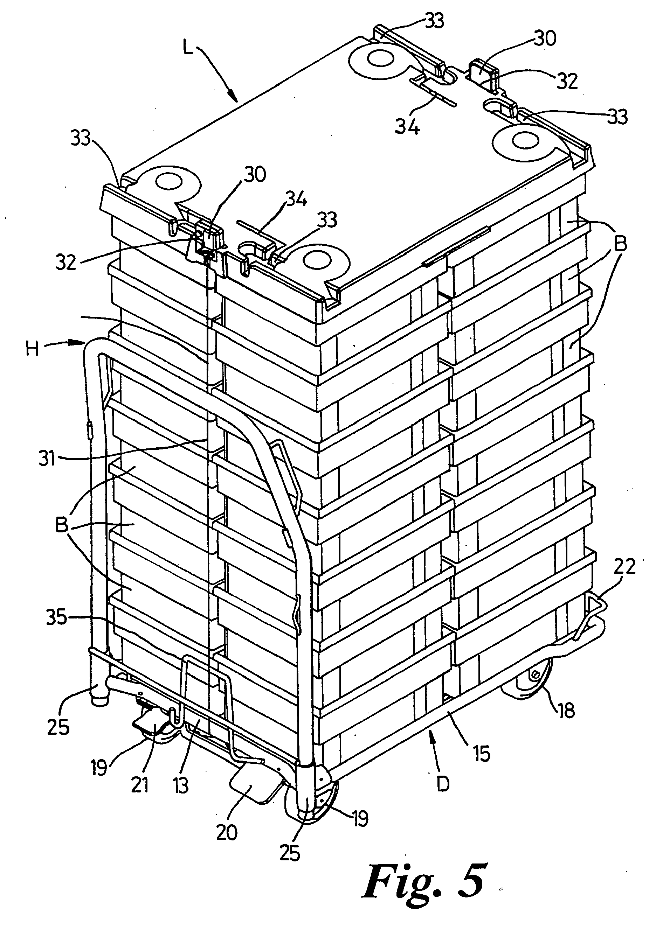

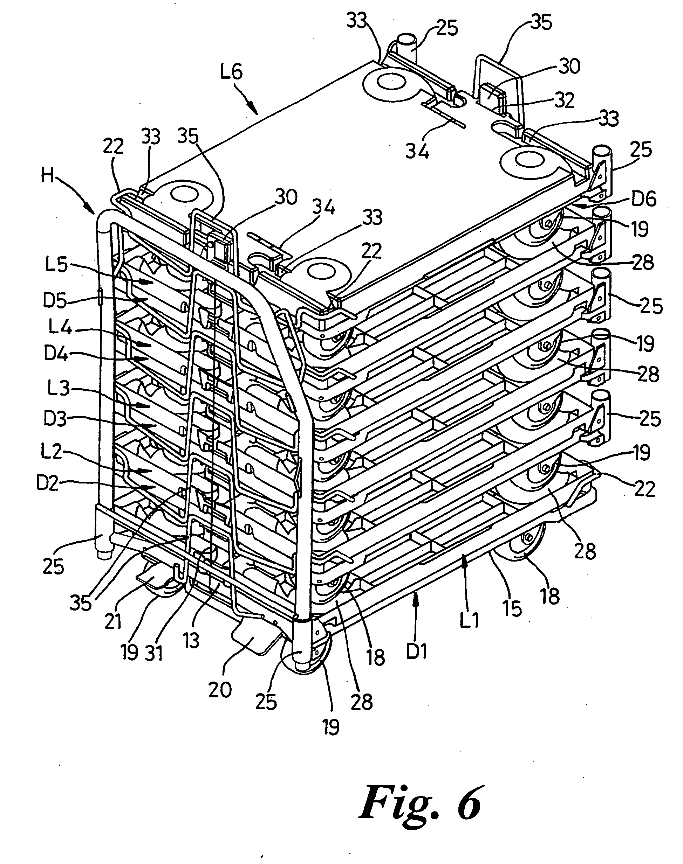

The dolly also has upstanding formations 22 at its corners at the end 12 formed by bent loops of wire welded thereto, and upstanding formations 23 at its corners at the end 13 formed of plates 24 and upright portions of tube 25 forming sockets for detachably receiving the legs of an inverted generally U-shaped tubular handle H as shown in Figures 5 and 6.

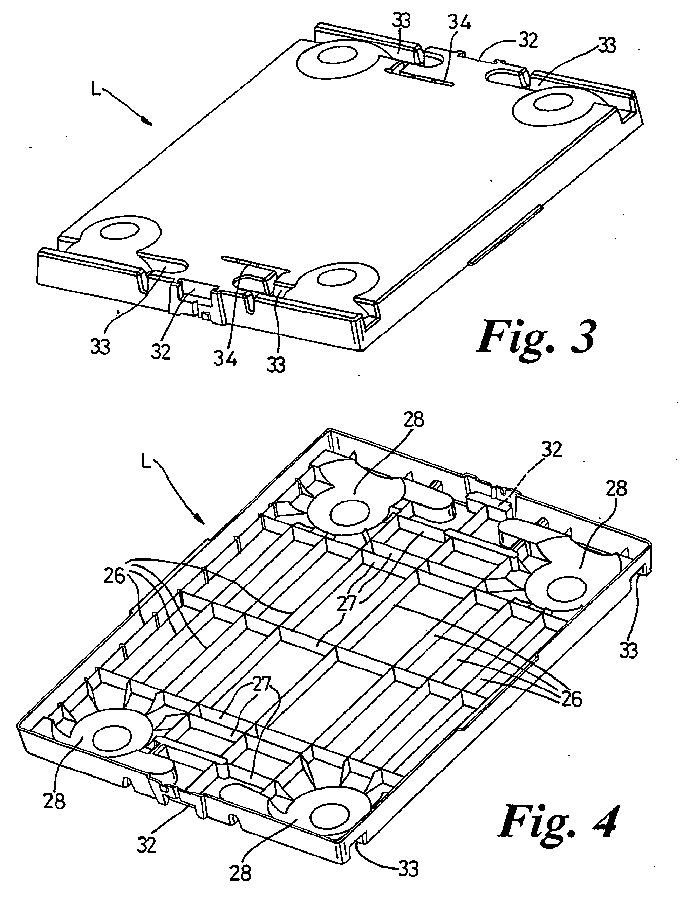

The lid L shown in Figures 3 and 4 is dimensioned to locate within the corner formations 22, 23 and is of shell construction with longitudinal and lateral stiffening webs 26, 27 respectively criss-crossing inside, areas 28 in the corners being sufficiently free of webs to allow for accommodation of the wheels 18, 19 of a like dolly when the lid L has been located on the dolly D in an inverted position, as will be further described with reference to Figure 6.

Below the ends 12, 13 of the dolly frame are pockets 29 for accommodating reels (not visible) contained in holders 30 seen in Figures 5 and 6 for retractable strapping strands 31 and adapted to be engaged with recesses 32 in the ends of the lid L after it has been placed on top of a load, such as trays or boxes B as shown in Figure 5, and the reels locked to secure the lid on top of the load. One end of each strand 31 is secured to the reel on to which the strand is wound by a clock spring in the reel, while the other end is passed through a hole in the back of the respective pocket 29 and secured by a ferrule (not shown) crimped in place.

The lid L is provided with hand- holds 33 adjacent its corners for use in manoeuvring a loaded dolly in the absence of handle H, and also slots 34 for location of information cards, e.g. as to contents, customer and other data.

Inverted generally U-shaped stacking wires 35 are also preferably provided at the ends 12, 13 of the dolly frame 10 for location of trays or boxes B, which stacking wires also facilitate location of the inverted lid L and the next dolly seated therein.

While the lid may have an overall depth of say 70mm, a thickness of shell of say 3mm enables very compact stacking of inverted lids and dollies in alternation, as shown in Figure 6, in which the bottom dolly and lid are denoted as D1 and L1 respectively, and successive dollies and inverted lids in the stack are denoted D2, L2 to D6, L6 except that the topmost lid L6 is disposed right way up to keep out rainwater and to enable the strapping stands 31 to be engaged with the topmost lid by means of respective reel holders 30 being located in their respective recesses 32 in the lid L6, and their reels locked to secure the load of dollies and lids on the bottom dolly D1.

Although the dollies D2 to D6 are shown orientated with their sockets 25 all at one end of the stack, the dollies and lids are not orientation sensitive as the web-free areas 28 in the corners at either end of the lids will accommodate the castors 18 at any angle.

Because the base of each dolly D1 to D6 comprises wire rods 11 in one plane, widely distributed support is provided for the inverted lids L1 to L5, for transmission of the load of successive dollies D2 to D6 seated therein to the bottom dolly D1.

## Claims

1. A dolly (D) and lid (L) combination for transporting loads, in which the dolly (D) is provided with at least two strapping strands (31) at opposite sides of the dolly (D) retractable on to reels and adapted to be engaged with corresponding sides of the lid (L) after it has been placed on top of a load, and the reels locked to secure the lid (L) on top of the load, wherein the dolly (D) has upstanding formations (22, 23, 35) for location of the lid (L) for return transportation, and the lid (L) is of shell construction with criss-crossing stiffening webs (26, 27) inside, areas in the corners being sufficiently free of webs to allow for accommodation of the wheels (18, 19) of a like dolly (D) when the lid (L) has been located on the first dolly (D) in an inverted disposition.

2. A dolly and lid combination as in Claim 1, wherein the stiffening webs extend in longitudinal and lateral directions.

3. A dolly and lid combination as in Claim 1 or Claim 2, wherein the lid has an overall depth of 70mm and a thickness of shell of 3mm.

4. A dolly and lid combination as in any one of Claims 1 to 3, wherein the upstanding formations are formed by bent wire loops welded to the corners of the dolly frame.

5. A dolly and lid combination as in any one of Claims 1 to 4, wherein the upstanding formations at one end include upright portions of tube forming sockets for detachably receiving the legs of an inverted generally U-shaped tubular handle.

6. A dolly and lid combination as in any one of Claims 1 to 5, wherein two opposite sides of the dolly are each provided with an inverted generally U-shaped stacking wire for location of loaded trays or boxes, which stacking wires also facilitate location of the inverted lid and the next dolly seated therein.

7. A dolly and lid combination as in any one of Claims 1 to 6, wherein when not in use to secure a load, the reels for the strapping strands are adapted to be accommodated in pockets below the respective sides of the dolly, one end of each strand being secured to the respective reel onto which the strand is wound by a clock spring in the reel, while the other end is passed through a hole in the back of the respective, pocket and secured by a ferrule crimped in place; and the lid is provided with recesses for engagement by the reel holders when required for securing a load.

8. A dolly and lid combination as in any one of Claims 1 to 7, wherein apart from the provision of castors at one end of the dolly and non-swivelling wheels at the other, and sockets at one end for a detachable handle, there is symmetry of the ends of the lid and of the ends of the dolly, whereby a plurality of such dollies and lids is not orientation sensitive, and the web-free areas in the corners at either end of the lids will accommodate the castors at any angle.

9. A dolly and lid combination as in any one of Claims 1 to 8, wherein the base of the dolly comprises wire rods or mesh in one plane.

## Patentansprüche

1. Kombination aus Rollwagen (D) und Deckel (L) zum Transportieren von Lasten, wobei der Rollwagen (D) an entgegengesetzten Seiten des Rollwagens (D) mit mindestens zwei Befestigungsgurten (31) versehen ist, die auf Spulen einziehbar und ausgebildet sind, um mit entsprechenden Seiten des Deckels (L) in Eingriff zu gelangen, nachdem dieser am oberen Ende einer Last angeordnet wurde, und wobei die Spulen verriegelt werden, um den Deckel (L) am oberen Ende der Last zu sichern, wobei der Rollwagen (D) aufrechte Gebilde (22, 23, 35) zum Anordnen des Deckels (L) für den Rücktransport aufweist und der Deckel (L) eine Schalenkonstruktion mit innen vorgesehenen kreuzweise verlaufenden Versteifungsrippen (26, 27) ist, wobei Bereiche in den Ecken ausreichend frei von Rippen sind, um das Unterbringen der Räder (18, 19) eines gleichen Rollwagens (D) zu ermöglichen, wenn der Deckel (L) in einer umgekehrten Anordnung auf dem ersten Rollwagen (D) angeordnet wurde.

2. Kombination aus Rollwagen und Deckel nach Anspruch 1, wobei sich die Versteifungsrippen in der Längs- und der Seitenrichtung erstrecken.

3. Kombination aus Rollwagen und Deckel nach Anspruch 1 oder Anspruch 2, wobei der Deckel eine Gesamttiefe von 70mm und eine Schalendicke von 3mm aufweist.

4. Kombination aus Rollwagen und Deckel nach einem beliebigen der Ansprüche 1 bis 3, wobei die aufrechten Gebilde durch gebogene Drahtbügel gebildet sind, die an die Ecken des Rollwagenrahmens geschweißt sind.

5. Kombination aus Rollwagen und Deckel nach einem beliebigen der Ansprüche 1 bis 4, wobei die aufrechten Gebilde an einem Ende aufrechte Rohrabschnitte umfassen, die Buchsen zum entfernbaren Aufnehmen der Beine eines umgekehrten im Allgemeinen U-förmigen rohrförmigen Griffs bilden.

6. Kombination aus Rollwagen und Deckel nach einem beliebigen der Ansprüche 1 bis 5, wobei zwei entgegengesetzte Seiten des Rollwagens jeweils mit einem umgekehrten im Allgemeinen U-förmigen Stapeldraht zum Anordnen von beladenen Wannen oder Kisten versehen sind, wobei die Stapeldrähte auch das Anordnen des umgekehrten Deckels und des nächsten darin aufgenommenen Rollwagens erleichtern.

7. Kombination aus Rollwagen und Deckel nach einem beliebigen der Ansprüche 1 bis 6, wobei die Spulen für die Befestigungsgurte, wenn diese nicht verwendet werden, um eine Last zu sichern, ausgebildet sind, um in Fächern unter den jeweiligen Seiten des Rollwagens aufgenommen zu werden, wobei ein Ende jedes Gurtes an der jeweiligen Spule befestigt ist, auf welche der Gurt durch eine Drehfeder in der Spule aufgewickelt wird, während das andere Ende durch ein Loch in der Rückseite des jeweiligen Faches hindurchgeführt und durch eine fest angequetschte Hülse gesichert wird; und der Deckel mit Ausnehmungen für das Eingreifen der Spulenhalterungen versehen ist, wenn dies zum Sichern einer Last erforderlich ist.

8. Kombination aus Rollwagen und Deckel nach einem beliebigen der Ansprüche 1 bis 7, wobei abgesehen von dem Bereitstellen von schwenkbaren Rädern an einem Ende des Rollwagens und nichtschwenkbaren Rädern an dem anderen und von Buchsen an einem Ende für einen entfernbaren Griff Symmetrie der Enden des Deckels und der Enden des Rollwagens vorliegt, wodurch eine Mehrzahl von derartigen Rollwagen und Deckeln nicht ausrichtungsempfindlich ist und die rippenfreien Bereiche in den Ecken an beiden Enden der Deckel die schwenkbaren Räder in jedem beliebigen Winkel aufnehmen.

9. Kombination aus Rollwagen und Deckel nach einem beliebigen der Ansprüche 1 bis 8, wobei die Basis des Rollwagens Drahtstäbe oder -gitter in einer Ebene umfasst.

## Revendications

1. Association de chariot (D) et couvercle (L) pour transporter des charges, dans laquelle le chariot (D) est pourvu d'au moins deux fils de cerclage (31) sur des côtés opposés du chariot (D) rétractables sur des bobines et adaptés pour être en prise avec des côtés correspondants du couvercle (L) après qu'il a été placé par-dessus une charge, et les bobines ont été verrouillées pour fixer le couvercle (L) par-dessus la charge, dans laquelle le chariot (D) comporte des formations verticales (22, 23, 24) pour le positionnement du couvercle (L) pour le transport de retour, et le couvercle (L) est de construction en coque avec des bandes de raidissement croisées (26, 27) à l'intérieur, des zones dans les coins étant suffisamment dépourvues de bandes pour permettre le logement des roues (18, 19) d'un chariot similaire (D) lorsque le couvercle (L) a été positionné sur le premier chariot (D) dans une disposition inversée.

2. Association de chariot et de couvercle selon la revendication 1, dans laquelle les bandes de raidissement s'étendent dans des directions longitudinale et latérale.

3. Association de chariot et de couvercle selon la revendication 1 ou la revendication 2, dans laquelle le couvercle possède une longueur totale de 70 mm et une épaisseur de coque de 3 mm.

4. Association de chariot et de couvercle selon l'une quelconque des revendications 1 à 3, dans laquelle les formations verticales sont formées par des boucles de fil métallique cintré soudées aux coins du cadre de chariot.

5. Association de chariot et de couvercle selon l'une quelconque des revendications 1 à 4, dans laquelle les formations verticales au niveau d'une extrémité comprennent des parties verticales de tube formant des douilles pour recevoir de façon détachable les pieds d'une poignée tubulaire en forme de U généralement à l'envers.

6. Association de chariot et de couvercle selon l'une quelconque des revendications 1 à 5, dans laquelle deux côtés opposés du chariot sont chacun pourvus d'un fil métallique d'empilage en forme de U généralement à l'envers pour le positionnement de plateaux ou boîtes chargés, lesquels fils métalliques d'empilage facilitent également le positionnement du couvercle à l'envers et le chariot suivant placé dans celui-ci.

7. Association de chariot et de couvercle selon l'une quelconque des revendications 1 à 6, dans laquelle lorsqu'elles ne sont pas utilisées pour fixer une charge, les bobines pour les fils de cerclage sont adaptées pour être logées dans des poches en dessous des côtés respectifs du chariot, une extrémité de chaque fil étant fixée à la bobine respective sur laquelle le fil est enroulé par un effet de ressort dans la bobine, alors que l'autre extrémité passe à travers un orifice dans la partie arrière de la poche respective et est fixée par une virole sertie en place ; et le couvercle est pourvu d'évidements destinés à entrer en prise avec les supports de bobine lorsque cela est nécessaire pour fixer une charge.

8. Association de chariot et de couvercle selon l'une quelconque des revendications 1 à 7, dans laquelle à l'exception de la mise à disposition de roulettes au niveau d'une extrémité du chariot et de roues non pivotantes au niveau de l'autre extrémité, et des douilles au niveau d'une extrémité pour une poignée détachable, les extrémités du couvercle et les extrémités du chariot sont symétriques, moyennant quoi une pluralité de tels chariots et couvercles n'est pas sensible à l'orientation, et les zones dépourvues de bande dans les coins au niveau des deux extrémités des couvercles logeront les roulettes à un angle quelconque.

9. Association de chariot et de couvercle selon l'une quelconque des revendications 1 à 8, dans laquelle la base du chariot comprend des fils machines ou une maille dans un plan.
